(19) Europäisches Patentamt
European Patent Office
Office européen des brevets

(11) Veröffentlichungsnummer: **0 254 924 B1**

(12) **EUROPÄISCHE PATENTSCHRIFT**

(45) Veröffentlichungstag der Patentschrift: **01.09.93**

(51) Int. Cl.[5]: **C09D 167/02**, B44D 3/18, B05D 5/04

(21) Anmeldenummer: **87109857.0**

(22) Anmeldetag: **08.07.87**

# (54) Zeichenmaterial.

(30) Priorität: **16.07.86 DE 3623984**

(43) Veröffentlichungstag der Anmeldung:
**03.02.88 Patentblatt 88/05**

(45) Bekanntmachung des Hinweises auf die Patenterteilung:
**01.09.93 Patentblatt 93/35**

(84) Benannte Vertragsstaaten:
**AT BE CH DE ES FR GB IT LI NL SE**

(56) Entgegenhaltungen:
**EP-A- 0 119 464** **DE-A- 2 553 354**
**FR-A- 2 000 975** **FR-A- 2 246 392**
**FR-A- 2 370 775** **US-A- 4 369 283**

**PATENT ABSTRACTS OF JAPAN, Band 7, Nr. 209 (C-186)[1354], 14. September 1983**

(73) Patentinhaber: **HOECHST AKTIENGESELLSCHAFT**

**D-65926 Frankfurt(DE)**

(72) Erfinder: **Lutz, Walter, Dr. Dipl.-Chem.**
**Herderstrasse 21**
**D-6203 Hochheim/M.(DE)**
Erfinder: **Keiper, Roman**
**Rathausstrasse 92**
**D-6200 Wiesbadeb-Biebrich(DE)**

**EP 0 254 924 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung betrifft ein Zeichenmaterial aus einem Kunststoffträger, der wenigstens auf einer Oberfläche mit einer Haftschicht, einer Pigment- oder Klarlackschicht und mit einer antistatisch ausgerüsteten Deckschicht versehen ist.

Zeichenmaterial wie zum Beispiel eine Zeichenfolie, wird in der Regel aus einem Kunststoffträger aus Celluloseacetat, Polyvinylchlorid, Polypropylen, vorzugsweise aus Polyester, insbesondere Polyethylenterephthalat, hergestellt, der auf mindestens einer Oberfläche mit einer Haftschicht versehen ist. Man beschichtet vorzugsweise mit einem Pigmentlacksystem, damit eine mit Bleistiftminen und Tusche beschrift- und beschreibbare Oberfläche entsteht. Das Material kann so ausgerüstet sein, daß man auf die Pigmentlackschicht eine gesonderte Deckschicht aufbringt, um eine Tuschehaftung zu erzielen. Im Falle, daß man nur mit Tusche zeichnen will, kann anstelle des Pigmentlackes ein Klarlack verwendet werden. Die Deckschicht ist dabei antistatisch ausgerüstet.

Es ist ein Zeichenmaterial bekannt (GB-PS 1,394,689), das ein wärmehärtbares Bindemittelsystem auf einem oberflächlich nicht vorbehandelten Polyesterschichtträger besitzt, das aus Polyvinylacetat, Harnstoff- bzw. Melamin- Formaldehyd-Harz und Säurebestandteil besteht. Bei guter Haftung auf dem Schichtträger sind die Eigenschaften der Zeichenschicht in bezug auf Beschriftbarkeit und Tuschehaftung noch nicht den üblichen technischen Anforderungen angepaßt. Eine antistatische Ausrüstung des Materials ist nicht vorhanden.

Es ist auch eine Zeichenschicht bekannt (GB-PS 1,222,727), die als Bindemittel teilweise hydrolysiertes Polyvinyllactat bzw.- glykolat, als Vernetzer Harnstoff-bzw. Melamin-Formaldehyd-Harz und p-Toluolsulfonsäure als Katalysator enthält. Hierbei wird die Vernetzung bei einer Temperatur von 120 °C in einer Zeit von etwa 20 Minuten vorgenommen. Eine solche Behandlung ist nicht unproblematisch und ergibt unerwünschte Veränderungen der Zeichenschicht und des Schichtträgers.

Aus der DD-PS 93 015 ist ein Verfahren zur Herstellung einer Zeichenfolie bekannt, bei der die Beschichtung einer oberflächlich vorbehandelten Polyesterfolie mit einer pigmentierten Bindemittelmatrix erfolgt, die aus Acrylat-, Alkyd- und Melamin-Formaldehyd-Harz besteht. Hierdurch erreicht man eine gute Haftung der Beschichtung und gute mechanische Festigkeit gegen Wasser und Licht. Auch diese Folie erfüllt noch nicht die Erwartungen, beispielsweise in Hinsicht auf die Tuscheannahme der wäßrigen oder Lösungsmittel haltigen Tuschen und auf die Lösungsmittelresistenz der Schicht, die man an eine gute Zeichenfolie stellt.

Es ist auch ein transparentes Zeichenmaterial mit einem Träger aus Polyesterfolie und einer Zeichenschicht bekannt (DE-PS 1 621 988 entsprechend GB-PS 1,231,407), die Kieselsäure und/oder Aluminiumsilikat als Pigment und als Bindemittel eine gehärtete Mischung aus Polyvinylalkohol, Harnstoff- oder Melamin-Formaldehyd-Vorkondensat und einem Acrylsäureester enthält. Nachteilig an seiner Herstellung ist, daß man Trocknen und Härten in zwei verschiedenen Arbeitsgängen durchführen muß. Nachteilig ist auch, daß das Material noch keine ausreichende Festigkeit bei der Beschriftung mit harten Filmminen und nur eine geringe Tuschenetzung besitzt. Außerdem ist es nur ungenügend antistatisch ausgerüstet.

Schließlich ist ein Zeichenmaterial bekannt (EP-A- 0 119 464 entsprechend US-PS 4 543 316), das aus einem Kunststoffträger, der wenigstens auf einer Oberfläche mit einer Haftschicht, einer Pigmentlack- oder Klarlackschicht und einer antistatisch ausgerüsteten Deckschicht versehen ist, besteht. Das Material erweist sich für spezielle Zwecke zum Beispiel bezüglich der Lösemittelresistenz und größerer Härte noch nicht als ohne weiteres brauchbar.

In der US-A 4 369 283 wird eine Mischung zur Beschichtung von Dosen aus Aluminium oder Stahl beschrieben. Das beschichtete Material enthält weder eine Haftschicht noch eine antistatisch ausgerüstete Deckschicht. Die Mischung enthält 25 - 50 % Polyester, 5 - 22 % Acrylpolymeres und 20 - 50 % Aminoplast.

In der FR-A 2 246 392 wird ein Zeichenmaterial ohne Haftschicht und ohne antistatisch ausgerüstete Deckschicht beschrieben, das eine Pigmentlackschicht auf Basis von Polyvinylbutyralen enthält, die freie Vinylalkoholgruppen tragen.

In der DE-B 2 553 354 werden transparente Schutzüberzüge für bedruckte Kunststoffolien beschrieben, die Acrylat-Copolymere mit freien Carboxylgruppen, Polymethylmethacrylat und Melaminharze enthalten. Diese Überzüge sind nicht beschreibbar.

Es war deshalb Aufgabe der vorliegenden Erfindung eine mit Bleistift und Tinte oder Tusche beschriftbare Zeichenfolie zu schaffen, die gegenüber Lösungsmitteln, die sich zum Beispiel in den Korrekturmitteln befinden, resistent ist. Weiterhin sollten die Zeichenschichten selbst bei Benutzung härtester Filmminen nicht angeritzt werden. Schließlich sollten die guten Eigenschaften des bekannten Materials erhalten bleiben, so daß bei der Beschriftung mit Tusche die Einhaltung der Randschärfe und der Linienbreite

gegeben war und eine gute Haftung der Schichten und der aufgebrachten Zeichen erhalten blieb. Ähnliches galt auch für die antistatische Ausrüstung. Bei Lagerung des Zeichenmaterials sollte keine Vergilbung des Zeichenträgers auftreten.

Die Lösung dieser Aufgabe geht aus von einem Zeichenmaterial der eingangs genannten Art, und sie ist dadurch gekennzeichnet, daß die Pigment- oder Klarlackschicht in Kombination

a) einen linearen aromatischen Polyester,

b) ein carboxyliertes Acrylatharz,

c) ein cyclisches Säureamid der allgemeinen Formel I

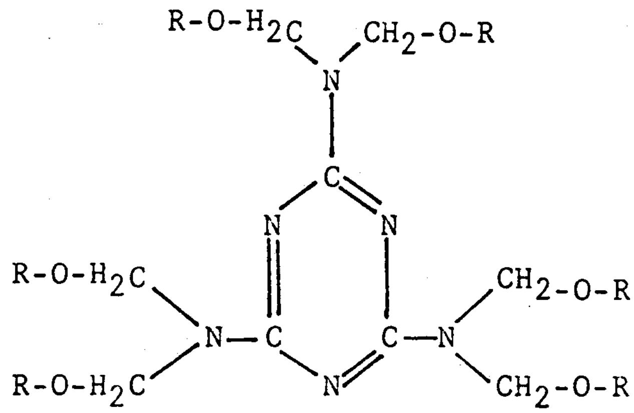

I

in der R Alkyl mit 1 bis 4 Kohlenstoffatomen bedeutet, und

d) einen Säurekatalysator

enthält, wobei das Gewichtsverhältnis von b) zu a) im Bereich von etwa (15-10) : 1 liegt und c) in einer Konzentration zwischen 10 und 20 Gewichtsprozent, bezogen auf das Gesamtgewicht der Schicht, vorhanden ist.

In bevorzugter Ausführungsform enthält die Pigment- oder Klarlackschicht gegebenenfalls anorganisches Pigment, Celluloseacylester, aromatischen Polyester, carboxyliertes Acrylatharz, cyclisches Säureamid und katalytische Mengen an Säure.

Hierdurch wird erreicht, daß man ein Zeichenmaterial zur Verfügung stellen kann, das höchsten Ansprüchen gewachsen ist, das zum Beispiel bei gutem Verbund der Schichten miteinander und dem Schichtträger, guter Beschreibbarkeit und Korrigierbarkeit, thermischer Beständigkeit und Beständigkeit gegen Feuchte und Wassereinwirkung sowie bei guter antistatischer Wirkung, eine erhöhte mechanische Festigkeit und Resistenz gegen Lösemittel aufweist. Die Oberflächenhärte der Schicht kann so eingestellt werden, daß noch keine Versprödung der Schicht eintritt und die Haftungsverhältnisse sich nicht verschlechtern.

Die in der Pigment- oder Klarlackschicht enthaltene erfindungsgemäße Kombination wird wie folgt beschrieben.

Als linearer aromatischer Polyester wird ein Mischpolyester aus Isophthalsäure und Terephthalsäure und einem oder mehreren Glykolen, wie Ethylenglykol, Propylenglykol eingesetzt. Handelsübliche Produkte werden beispielsweise unter dem Namen Dynapol® (Dynamit Nobel) vertrieben. Die Konzentration des Polyesters liegt zwischen 2 und 4 Gewichtsprozent, vorzugsweise 3,5 Gewichtsprozent, bezogen auf das Gesamtgewicht der Pigment- oder Klarlackschicht.

Als carboxyliertes Acrylatharz dienen Mischpolymerisate aus freie Carboxylgruppen enthaltenden Vinylverbindungen mit Acryl- oder Methacrylsäureestern. Besonders bevorzugt ist ein Acrylatharz mit einer Viscosität im Bereich zwischen 700 und 750 mPas und einer Säurezahl zwischen etwa 50 und 100, insbesondere etwa 60 bis 70. Das carboxylierte Acrylatharz ist in der Pigment- oder Klarlackschicht in einer Konzentration zwischen etwa 30 und 50, vorzugsweise 40 bis 45 Gewichtsprozent, bezogen auf das Gesamtgewicht der Pigment- oder Klarlackschicht vorhanden.

Als cyclisches Säureamid wird Hexaalkyloxymethylmelamin, bevorzugt Hexamethoxymethylmelamin, eingesetzt. Die Konzentration in der Pigment- oder Klarlackschicht liegt zwischen 10 und 20, bevorzugt 15 Gewichtsprozent, bezogen auf das Gesamtgewicht der Schicht.

Es hat sich als vorteilhaft erwiesen, das im Handel befindliche Produkt (Cymel® der CYANAMID) vor Einsatz zu behandeln durch Hochvakuumdestillation und Umkristallisation aus Petrolether, um oligomere Produkte nicht an der Vernetzungsreaktion teilnehmen zu lassen.

Der lineare aromatische Polyester und das carboxylierte Acrylatharz reagieren sehr schnell mit dem anwesenden Hexaalkyloxymethylmelamin in einer Kondensationsreaktion.

Die Reaktion tritt oberhalb etwa 60 °C ein und ist in wenigen Minuten beendet. Die Reaktion wird durch eine Säure katalysiert. Es wird eine feste, starke Säure, d.h. mit einem niederen pH-Wert, vorzugsweise p-Toluolsulfonsäure, eingesetzt. Die Konzentration beträgt 0,5 bis 3,5 Gewichtsprozent, vorzugsweise 1,5 Gewichtsprozent, bezogen auf das Gesamtgewicht der Pigment- oder Klarlackschicht.

Überraschend hierbei war, daß durch Einsatz des Hexaalkyloxymethylmelamins anstelle von Melamin-FormaldehydHarzen oder entsprechenden Vorkondensaten, eingesetzt nach dem Stand der Technik, die Vernetzungsgeschwindigkeit eine solche Steigerung erfuhr, daß die Schichthärtung bereits nach einer Verweilzeit von 30 Sekunden in einer Trocknerstrecke mit linear ansteigender Temperatur von 80 °C bis 120 °C optimal war. Beim Überwischen der Schicht mit Lösungsmittel tritt kein Anlösen der Pigment-oder Klarlackschicht auf. Beim Beschriften der Schicht mit Filmminen höchster Härte ist keine Verletzung der Schicht zu beobachten. Die Haftung der Pigment- oder Klarlackschicht zur aufgebrachten Haftmasse ist ausgezeichnet.

Die erfindungsgemäße Kombination für die Pigment- oder Klarlackschicht enthält zusätzlich als filmbildendes Material eine Celluloseverbindung, z.B. Celluloseacetat, Celluloseacetatbutyrat oder Celluloseacetatpropionat entweder allein, was bevorzugt ist, oder in Mischung. Auch Polyvinylidenchlorid, Polyvinylchlorid, Polyvinylacetat, Polyurethan, Polystyrol, Polyester und Polycarbonate können verwendet werden.

Vorzugsweise enthält die Pigment- oder Klarlackschicht ein Celluloseacetatpropionat mit mittlerem Molekulargewicht. Es dient zur optimalen Umhüllung der eingesetzten Pigmente. Es ist in einer Konzentration zwischen etwa 25 und 40 Gewichtsprozent, vorzugsweise 35 Gewichtsprozent, bezogen auf das Gesamtgewicht der Pigment- oder Klarlackschicht vorhanden. Es ist aber darauf zu achten, daß der Anteil nicht zu einer schlechteren Durchhärtung der Schicht führt.

Im Falle einer Pigmentlackschicht enthält die Schicht je nach Bedarf als anorganisches Pigment Aluminiumoxid, Aluminiumsilikat, Titandioxid und Siliziumdioxid. Bevorzugt enthält die Schicht Aluminiumsilikate.

Die erfindungsgemäße härtbare Schicht trägt man nach einem der dafür üblichen Beschichtungsverfahren, wie zum Beispiel mit einer Rollrakel oder durch Walzenantrag an.

Als Lösungsmittel haben sich niedere Alkohole und Ketone allein oder im Gemisch bewährt. Zur Verbesserung der Schichtkosmetik können Verlaufmittel, wie Polysiloxane, oder ein gewisser Anteil eines Hochsieders, zum Beispiel Methylglykolacetat zugemischt werden.

Die Dicke der Pigment- oder Klarlackschicht beträgt, auf das Schichtgewicht bezogen, 8 bis 12 g/m$^2$.

Als Kunststoffträger dienen solche aus Polyvinylchlorid, Polycarbonat, Polystyrol, Polysulfon, Polyolefin oder aus Polyester bzw. Celluloseester. Wegen der hervorragenden Dimensionsstabilität, die von besonderer Wichtigkeit ist, werden vorzugsweise Folien auf Basis Polyester, wie etwa Polyethylenterephthalat eingesetzt.

Als Haftschichten können bekannte Mischungen, die z.B. in der DE-PS 12 28 414, entsprechend GB-PS 1,061,784, beschrieben sind und aus einem Gemisch der wäßrigen Lösung einer Halogencarbonsäure, feinst verteiltem Siliziumdioxid und Netzmitteln bestehen oder auch aus Mischungen nach DE-AS 16 94 534, entsprechend GB-PS 1,209,992.

Weiterhin können substrierte Folien nach DE-AS 16 29 480, entsprechend GB-PS 1,127,076, und nach DE-AS 20 34 407, entsprechend GB-PS 1,264,338, eingesetzt werden. Jedoch sind die Haftmassen, gemäß DE-OS 33 15 977, entsprechend US-PS 4,576,981, bevorzugt, die ein Mischpolymerisat des Vinylidenchlorids und einen Celluloseacylester enthalten.

Die Pigment- bzw. Klarlackschicht wird zusätzlich noch mit einer antistatischen Deckschicht versehen, wie sie zum Beispiel in der EP-A- 0 119 464, entsprechend US-PS 4,543,316 beschrieben ist. Diese dient zur optimalen Tuschebeschreibbarkeit und zur antistatischen Ausrüstung der Zeichenfolie. Die Haftung der Deckschicht auf der Pigment- bzw. Klarlackschicht und die Haftung der aufgebrachten Zeichen sind optimal.

Das erfindungsgemäße Zeichenmaterial kann auch als Lichtpausfolie eingesetzt werden, wenn man es mit einer lichtempfindlichen, insbesondere Diazochemikalien enthaltenden Schicht versieht. Eine solche Schicht enthält als Zweikomponenten-Diazotypieschicht beispielweise Diazoniumsalz und Kupplungskomponente, Stabilisator und übliche Zusätze.

Die folgenden Beispiele sollen die Erfindung näher erläutern.

## Beispiel 1

Als Kunststoffträger dient eine 75 µm dicke Folie aus Polyethylenterephthalat, die beidseitig eine Haftschicht aus einem Mischpolyester und einem Mischpolymerisat des Vinylidenchlorids und eines

Celluloseacylesters besitzt. Diese Haftmassen sind aus der DE-OS 33 15 977 entsprechend US-PS 4,576,981 bekannt.

Auf diese Haftschicht wird eine Pigmentlackschicht aufgebracht. Diese besteht aus 40 Gewichtsprozent Aluminiumsilikat, 30 Gewichtsprozent carboxyliertem Acrylatharz (Surcol®836 W der Fa. Allied Colloid), 20 Gewichtsprozent Celluloseacetatpropionat (Propionylgehalt 45%, Viscosität 200 mPas nach DIN 53015), 3 Gewichtsprozent aromatischem Mischpolyester (DYNAPOL® LH 812 der Fa. Dynamit Nobel), 8 Gewichtsprozent Hexamethoxymethylmelamin und 2 Gewichtsprozent p-Toluolsulfonsäure.

Der Pigmentlack wird mit einer Rollrakel aufgebracht und in einer Trocknerstrecke mit linearem Trocknungsprofil (80 °C - 120 °C) innerhalb 1 Minute angetrocknet und vernetzt. Die Pigmentlackschicht läßt sich nach dieser Zeit nicht mehr durch 100-maliges Überwischen mit einem Aceton bzw. Methanol getränktem Vlies ablösen.

Beim Beschriften der Zeichenschicht mit einer Bleistiftmine steigender Härte (HB, 1H-9H) beobachtet man kein Durchritzen der Schicht bis auf den Polyesterträger. Eine leichte oberflächliche Beschädigung der Schicht tritt ab Härte 6H auf.

Vergleichsbeispiel:

Ein in Analogie zu Beispiel 1 vorbehandelter Kunststoffträger wird mit einer Pigmentlackschicht, bestehend aus 42 Gewichtsprozent Aluminiumsilikat, 32 Gewichtsprozent carboxyliertem Acrylatharz (SURCOL® 836 W), 22 Gewichtsprozent Celluloseacetatpropionat, 4 Gewichtsprozent aromatischem Mischpolyester (DYNAPOL® LH 812) und 2 Gewichtsprozent p-Toluolsulfonsäure, versehen.

Beschichtungs- und Trocknungsbedingungen sind vergleichbar zu Beispiel 1. Jedoch läßt sich die Schicht bereits durch einmaliges Überwischen mit einem Aceton bzw. Methanol getränkten Vlies an- bzw. ablösen. Beim Beschriftungstest mit Bleistiftminen steigender Härte beobachtet man ab der Härte 5H ein spanartiges Abheben der Pigmentlackschicht, so daß der blanke Polyester der Basisfolie sichtbar wird. Die oberflächliche Beschädigung der Schicht tritt bereits ab Härte 4H auf.

Beispiel 2:

Eine entsprechend Beispiel 1 mit einer Haftmasse und einer Pigmentlackschicht versehene Polyethylenterephthalatfolie wird zusätzlich noch mit einer Deckschicht versehen. Diese besteht, wie in Beispiel 5 der EP-A- 0 119 464 beschrieben, aus einem Polymerisat des Vinylacetats und einem mit Epichlorhydrin modifizierten Polyamino/Polyamid-Harz.

Die Eigenschaften der Bleistiftbeschreibbarkeit und der Lösungsmittelresistenz des Materials aus Beispiel 1 werden hierdurch nicht negativ beeinflußt. Jedoch konnte auf diese Weise eine antistatische Ausrüstung des Zeichenmaterials mit einem Oberflächenwiderstand von

$10^{9} - 10^{10}\,\Omega$

erreicht werden. Weiterhin wird bei der Beschriftung mit Tusche eine sehr gute Einhaltung der Linienbreite gewährleistet. Randschärfe der Linien, Benetzung und Tuschehaftung waren ausgezeichnet.

Beispiel 3:

Eine entsprechend Beispiel 1 mit einer Haftmasse versehene Folie auf Basis Polyethylenterephthalat wird mit folgenden Pigmentlackschichten versehen. Beschichtungs- und Trocknungsbedingungen entsprechen denen im Beispiel 1 (Angaben in Gewichtsteilen).

| | A | B | C |
|---|---|---|---|
| Pigment | 40 | 40 | 40 |
| Celluloseacetat-propionat | - | 20 | 20 |
| Surcol 836 W | 45 | - | 30 |
| DYNAPOL LH 812 | 8 | 32 | - |
| Hexamethoxy-methylmelamin | 5 | 5 | 5 |
| p-Toluolsulfonsäure | 2 | 2 | 2 |

Die Pigmentlackschichten erhalten eine wie im Beispiel 2 beschriebene Deckschicht. Im Vergleich zu Materialien, die entsprechend Beispiel 2 hergestellt wurden, treten folgende Unterschiede auf:

A: Die Härte und die Lösungsmittelresistenz der Pigmentlackschicht entsprechen der des Beispiels 1. Allerdings neigen die eingearbeiteten Pigmente zum Aufschwimmen.

B: Nach dem Trocknungsprozeß wird eine äußerst spröde Schicht erhalten. Bei mechanischer Beanspruchung der Schicht platzt die zwar gut vernetzte Schicht großflächig vom Schichtträger ab. Weiterhin ist die Haftung der Deckschicht vermindert.Dies macht sich in einer ungenügenden Haftung der Tuschelinien bemerkbar.

Beim Lagern des Zeichenmaterials am Tageslicht tritt in Abhängigkeit von der Zeit eine deutlich sichtbare Vergilbung auf.

C: Die Schicht zeigt eine verminderte Lösungsmittelresistenz. Bereits nach 50 maligem Überwischen eines mit Aceton/Methanol getränkten Vlieses kommt es zur Ablösung der Pigmentlackschicht.

Beispiel 4:

Ein in Analogie zu Beispiel 1 vorbehandelter Kunststoffträger wird mit einer Klarlackschicht, bestehend aus 50 Gewichtsteilen (GT) eines carboxylierten Acrylatharzes (Surcol®836 W), 27 GT eines Polyvinylacetats mit mittlerem Molekulargewicht von etwa 5000 (Mowilith®70), 10 GT Hexamethoxymethylmelamin , 5 GT eines aromatischen Mischpolyesters (DYNAPOL® LH 812) und 2 GT p-Toluolsulfonsäure versehen.

Die Beschichtungs- und Trocknungsbedingungen entsprechen denen im Beispiel 1. Anschließend wird die Klarlackschicht mit der im Beispiel 2 beschriebenen Deckschicht versehen. Die Lösungsmittelresistenz und Härte der Klarlackschicht sind vergleichbar zu derjenigen der Pigmentlackschicht in Beispiel 1. Tuscheannahme, Tuschebeschreibbarkeit und Haftung der Tusche auf dem Zeichnungsträger sind ausgezeichnet.

Beispiel 5:

Ein in Analogie zu Beispiel 1 beidseitig vorbehandelter Kunststoffträger wird beidseitig mit einer Klarlackschicht bestehend aus 70 GT eines carboxylierten Acrylatharzes (SURCOL® 836 W), 20 GT Hexamethoxymethylmelamin, 7 GT eines aromatischen Mischpolyesters (DYNAPOL® LH 812) und 2 GT p-Toluolsulfonsäure versehen. Nach dem Trocknen bringt man beidseitig eine Deckschicht entsprechend Beispiel 2 auf. Auch in diesem Fall sind die Lösungsmittelresistenz und Härte, die antistatische Ausrüstung und die Tuschehaftung ausgezeichnet.

Beispiel 6:

Eine entsprechend Beispiel 1 hergestellte Pigmentlackschicht wird zusätzlich noch mit einer Zweikomponenten-Diazotypie-Schicht versehen. Das Rezept der Sensibilisierung setzt sich wie folgt zusammen:

| | |
|---|---|
| 10 ml | Wasser |
| 100 ml | Isopropanol |
| 5 ml | Ameisensäure |

| | |
|---|---|
| 4 g | Weinsäure |
| 2 g | 2-(β-Hydroxyethoxy)-phenol |
| 2 g | 2,4-Dihydroxy-N-(2-hydroxy-4-(4'-methylphenylmercapto)-2,5 diethoxybenzoldiazoniumchlorid (abgeschieden als Zinksalz) |

Das sensibilisierte Material läßt sich in handelsüblichen Pausmaschinen belichten und entwickeln.

## Patentansprüche

1. Zeichenmaterial aus einem Kunststoffträger, der wenigstens auf einer Oberfläche mit einer Haftschicht, einer Pigment- oder Klarlackschicht und mit einer antistatisch ausgerüsteten Deckschicht versehen ist, dadurch gekennzeichnet, daß die Pigment- oder Klarlackschicht in Kombination
   a) einen linearen aromatischen Polyester,
   b) ein carboxyliertes Acrylatharz,
   c) ein cyclisches Säureamid der allgemeinen Formel I

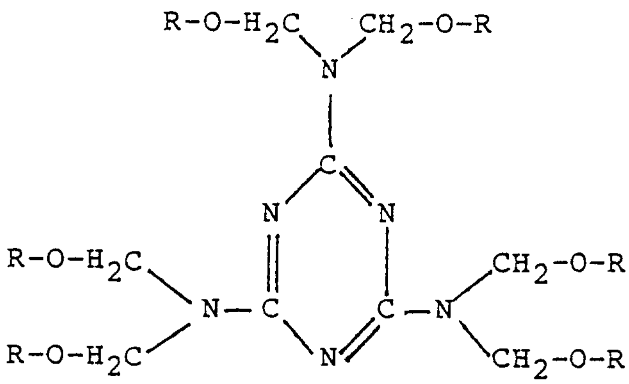

I

   in der R Alkyl mit 1 bis 4 Kohlenstoffatomen bedeutet, und
   d) einen Säurekatalysator
   enthält, wobei das Gewichtsverhältnis von b) zu a) im Bereich von etwa (15-10) : 1 liegt und c) in einer Konzentration zwischen 10 und 20 Gewichtsprozent, bezogen auf das Gesamtgewicht der Schicht, vorhanden ist.

2. Material nach Anspruch 1, dadurch gekennzeichnet, daß die Pigment- oder Klarlackschicht gegebenenfalls anorganisches Pigment, Celluloseacylester, aromatischen Polyester, carboxyliertes Acrylatharz, cyclisches Säureamid und katalytische Mengen an Säure enthält.

3. Material nach Anspruch 1 oder 2, dadurch gekennzeichnet, daß als aromatischer Polyester ein Mischpolyester aus Isophthalsäure und Terephthalsäure und einem oder mehreren Glykolen vorhanden ist.

4. Material nach Anspruch 1 oder 2, dadurch gekennzeichnet, daß als carboxyliertes Acrylatharz ein Harz mit einer Viskosität von 700 - 750 mPas und einer Säurezahl zwischen 50 und 100 vorhanden ist.

5. Material nach Anspruch 1 oder 2, dadurch gekennzeichnet, daß als cyclisches Säureamid Hexamethoxymethylmelamin vorhanden ist.

6. Material nach Anspruch 1 oder 2, dadurch gekennzeichnet, daß als Säurekatalysator p-Toluolsulfonsäure vorhanden ist.

7. Zeichenmaterial nach Anspruch 1 bis 6, dadurch gekennzeichnet, daß es mit einer lichtempfindlichen Schicht versehen ist.

## Claims

1. A drafting material which comprises a plastic support having, on at least one surface, an adhesive layer, a layer of a pigmented or clear lacquer and an antistatic top layer, wherein the layer of pigmented or clear lacquer contains a combination of
   a) a linear aromatic polyester,
   b) a carboxylated acrylate resin,
   c) a cyclic acid amide, corresponding to the general formula I

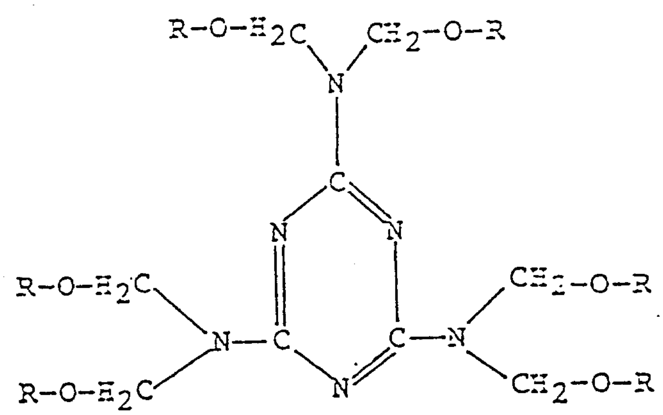

I

   where R stands for an alkyl group having 1 to 4 carbon atoms, and
   d) an acid catalyst,
   the weight ratio of b) to a) being in the range of about (15 to 10):1 and c) being present in a concentration of between 10 and 20 percent by weight, relative to the total weight of the layer.

2. The material as claimed in claim 1, wherein the layer of pigmented or clear lacquer optionally contains an inorganic pigment, a cellulose acyl ester, an aromatic polyester, a carboxylated acrylate resin, a cyclic acid amide, and a catalytically acting amount of acid.

3. The material as claimed in claim 1 or claim 2, wherein the aromatic polyester used comprises a copolyester of isophthalic acid and terephthalic acid and one or several glycols(s).

4. The material as claimed in claim 1 or 2, wherein the carboxylated acrylate resin used comprises a resin having a viscosity ranging from 700 to 750 mPas and an acid number between 50 and 100.

5. The material as claimed in claim 1 or claim 2, wherein the cyclic acid amide used comprises hexamethoxymethylmelamine.

6. The material as claimed in claim 1 or claim 2, wherein the acid catalyst used comprises p-toluene sulfonic acid.

7. The drafting material as claimed in claims 1 to 6, which is provided with a light-sensitive layer.

## Revendications

1. Matière pour le dessin, constituée d'un support en matière plastique équipé, sur au moins une de ses faces, d'une couche adhésive, d'une couche de laque pigmentée ou transparente et d'une couche de recouvrement antistatique, caractérisée en ce que la couche de laque pigmentée ou transparente contient une combinaison de :
   a) un polyester aromatique linéaire,
   b) une résine acrylate carboxylée,

c) un amide d'acide cyclique, de formule générale I

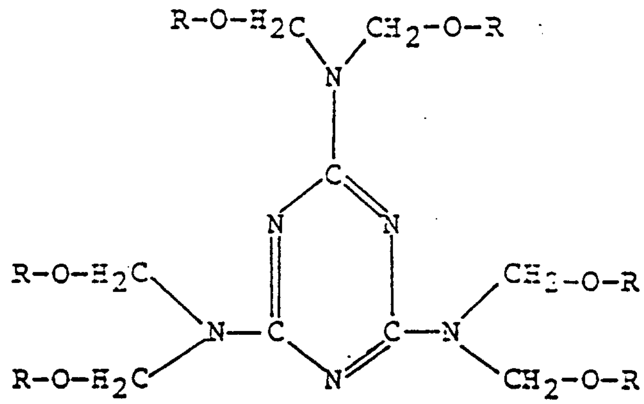

I

dans laquelle R représente un groupe alkyle ayant de 1 à 4 atomes de carbone,
et

d) un catalyseur acide,

le rapport de b) à a) valant environ (de 15 à 10) : 1 en poids et c) étant présent à une concentration comprise entre 10 et 20 pour-cent en poids, par rapport au poids total de la couche.

**2.** Matière selon la revendication 1, caractérisée en ce que la couche de laque pigmentée ou transparente contient, optionnellement, un pigment inorganique, un ester acylique de cellulose, un polyester aromatique, une résine acrylate carboxylée, un amide d'acide cyclique et des quantités d'acide correspondant à une catalyse.

**3.** Matière selon la revendication 1 ou 2, caractérisée en ce que le polyester aromatique comprend un copolyester d'acide isophtalique et d'acide téréphtalique et un ou plusieurs glycol(s).

**4.** Matière selon la revendication 1 ou 2, caractérisée en ce qu'une résine ayant une viscosité valant de 700 à 750 mPas et un indice d'acide compris entre 50 et 100 représente la résine acrylate carboxylée.

**5.** Matière selon la revendication 1 ou 2, caractérisée en ce que l'hexaméthoxyméthylmélamine représente l'amide d'acide cyclique.

**6.** Matière selon la revendication 1 ou 2, caractérisée en ce que l'acide p-toluènesulfonique représente le catalyseur acide.

**7.** Matière selon les revendications 1 à 6, caractérisée en ce qu'elle est munie d'une couche photosensible.